# EUROPEAN PATENT SPECIFICATION

(11) **EP 4 560 751 B1**
(45) Date of publication and mention of the grant of the patent: **25.11.2026**
(21) Application number: 23914977.6
(22) Date of filing: 19.12.2023
(51) Int. Cl.: H01M 10/04, H01M 10/0583, H01M 10/0587

(54) **ELECTRODE ASSEMBLY MANUFACTURING DEVICE AND ELECTRODE ASSEMBLY MANUFACTURING METHOD**
VORRICHTUNG ZUR HERSTELLUNG EINER ELEKTRODENANORDNUNG UND VERFAHREN ZUR HERSTELLUNG EINER ELEKTRODENANORDNUNG
DISPOSITIF DE FABRICATION D'ENSEMBLE ÉLECTRODE ET PROCÉDÉ DE FABRICATION D'ENSEMBLE ÉLECTRODE

(30) Priority: 03.01.2023 KR 20230000706
(43) Date of publication of application: 28.05.2025
(73) Proprietor: LG Energy Solution, Ltd., Seoul 07335 (KR)
(72) Inventor: YOON, Se Hyun, Daejeon 34122 (KR); KIM, Nam Young, Daejeon 34122 (KR); KIM, Yong Nam, Daejeon 34122 (KR); KIM, Jong Seok, Daejeon 34122 (KR); CHOI, Jongkwan, Daejeon 34122 (KR)
(74) Representative: Plasseraud IP
(86) International application number: PCT/KR2023/020959
(87) International publication number: WO 2024/147517

(56) References cited:
- EP-A1- 3 907 807
- JP-A- 2004 022 449
- JP-A- 2016 173 928
- JP-A- 2017 016 946
- JP-A- 2022 018 028
- KR-A- 20200 023 852

## Description

### [Technical Field]

The present application claims priority to and the benefit of Korean Patent Application No. 10-2023-0000706 filed in the Korean Intellectual Property Office on January 3, 2023.

The present invention relates to an electrode assembly manufacturing apparatus and an electrode assembly manufacturing method.

### [Background Art]

Secondary batteries can be recharged, unlike primary batteries, and may be formed to have a small size and a large capacity. Accordingly, a lot of research and development on the secondary batteries are currently in progress. As technology development and demand for mobile devices increase, the demand for secondary batteries as an energy source is sharply increasing.

Secondary batteries are classified into coin type batteries, cylindrical type batteries, prismatic type batteries, and pouch type batteries depending on a shape of a battery case. In a secondary battery, an electrode assembly mounted inside a battery case is a chargeable and dischargeable power generating device having a structure in which electrodes and a separator are stacked.

The electrode assembly may be approximately classified into a jelly-roll type electrode assembly in which a separator is interposed between a positive electrode and a negative electrode, each of which is provided in a form of a sheet coated with an active material, and then, the positive electrode, the separator, and the negative electrode are wound, a stack-type electrode assembly in which a plurality of positive and negative electrodes with a separator therebetween are sequentially stacked, and a stack and folding-type electrode assembly in which stack-type unit cells are wound with a separation film having a long length.

Among these, an electrode assembly in which a separator is folded in a zigzag manner and electrodes are alternately positioned between the respective folds can be manufactured. To this end, a stack in which a separator is folded in a zigzag manner and electrodes are alternately positioned between the respective folds can be manufactured.

In this case, a winding process may be performed in which an end of the separator last stacked (folded) on the stack is pulled and cut, and a predetermined length of the cut end of the separator is wrapped around the stack. Finally, the wound stack is heated and pressed to complete the electrode assembly.

However, there is a problem in that the performance of the completed electrode assembly deteriorates due to wrinkles in the stacked separator caused by the influence of air space or static electricity during the winding process.
EP3907807 relates to an electrode assembly and a forming method and production system therefor.

### [Detailed Description of the Invention]

### [Technical Problem]

The present invention is to provide an apparatus and a method for manufacturing an electrode assembly.

### [Technical Solution]

An exemplary embodiment of the present invention provides an electrode assembly manufacturing apparatus for manufacturing an electrode assembly in which a first electrode and a second electrode are alternately arranged between folds of a separator, the electrode assembly manufacturing apparatus including: a first electrode supply unit configured to supply the first electrode to a stack table; a second electrode supply unit configured to supply the second electrode to the stack table; a separator supply unit configured to supply the separator to the stack table; the stack table on which the first electrode, the separator, and the second electrode are stacked in a form of a stack in which the separator last stacked on the stack table has an extended region so as to be wound while being in contact with at least one surface of the stack, and the first electrode and the second electrode are alternately arranged between the folds of the separator; a separator winding unit configured to perform winding such that the extended region for winding of the separator is in contact with at least one surface of the stack; and a brushing unit configured to brush the wound stack while heating the same.

In addition, an exemplary embodiment of the present invention provides an electrode assembly manufacturing method for manufacturing an electrode assembly in which a first electrode and a second electrode are alternately arranged between folds of a separator, the electrode assembly manufacturing method including: supplying the first electrode to a stack table; supplying the second electrode to the stack table; supplying the separator to the stack table; manufacturing a stack including the first electrode, the separator, and the second electrode by stacking the first electrode, the separator, and the second electrode on the stack table such that the separator last stacked on the stack table has an extended region so as to be wound while being in contact with at least one surface of the stack, and the first electrode and the second electrode are alternately arranged between the folds of the separator; performing winding such that the extended region for winding of the separator is in contact with at least one surface of the stack; and brushing the wound stack while heating the same.

### [Advantageous Effects]

The electrode assembly manufacturing apparatus and the electrode assembly manufacturing method according to the exemplary embodiments of the present application can shorten the time required to manufacture the electrode assembly.

The electrode assembly manufacturing apparatus and the electrode assembly manufacturing method according to the exemplary embodiments of the present application can prevent wrinkles in the separator during the manufacturing process, and thus can provide an electrode assembly with excellent performance.

### [Brief Description of Drawings]

FIG. 1 is a flowchart schematically showing the step of applying a brushing unit or a brushing method according to an exemplary embodiment of the present invention.
FIG. 2 is a plan view illustratively showing an electrode assembly manufacturing apparatus according to an exemplary embodiment of the present invention.
FIG. 3 is a front view showing a concept of the electrode assembly manufacturing apparatus according to the exemplary embodiment of the present invention.
FIG. 4 is a cross-sectional view illustratively showing a general electrode assembly.
FIG. 5 is a conceptual view showing a pressing process in the electrode assembly manufacturing method or electrode assembly manufacturing apparatus according to the exemplary embodiment of the present invention.
FIG. 6(a) is a perspective view showing a first press unit according to an exemplary embodiment of the present invention, and FIG. 6(b) is a perspective view showing a second press unit according to an exemplary embodiment of the present invention.
FIG. 7 is a perspective view showing a stack table in the electrode assembly manufacturing apparatus according to the exemplary embodiment of the present invention.
FIG. 8 is a perspective view showing a first electrode seating table in the electrode assembly manufacturing apparatus according to the exemplary embodiment of the present invention.
FIG. 9 is a perspective view showing a second electrode seating table in the electrode assembly manufacturing apparatus according to the exemplary embodiment of the present invention.
FIG. 10 is a perspective view showing a first suction head in the electrode assembly manufacturing apparatus according to the exemplary embodiment of the present invention.
FIG. 11 is a bottom view showing the first suction head in the electrode assembly manufacturing apparatus according to the exemplary embodiment of the present invention.
FIG. 12 is a plan view showing a holding mechanism and a stack table in the electrode assembly manufacturing apparatus according to the exemplary embodiment of the present invention.

### < Explanation of Reference Numerals and Symbols >

- 10:: electrode assembly
- 11:: first electrode
- 11a:: first electrode tab
- 12:: second electrode
- 12a:: second electrode tab
- 14:: separator
- 51:: gripper
- 51a:: main body
- 51b:: fixing portion
- 100:: electrode assembly manufacturing apparatus
- 110:: stack table
- 111:: table body
- 112:: stack table heater
- 120:: separator supply unit
- 121:: separator heating unit
- 122:: separator roll
- 130:: first electrode supply unit
- 131:: first electrode seating table
- 132:: first electrode heater
- 133:: first electrode roll
- 134:: first cutter
- 135:: first conveyor belt
- 136:: first electrode supply head
- 140:: second electrode supply unit
- 141:: second electrode seating table
- 142:: second electrode heater
- 143:: second electrode roll
- 144:: second cutter
- 145:: second conveyor belt
- 146:: second electrode supply head
- 150:: first electrode stack unit
- 151:: first suction head
- 151a:: vacuum suction hole
- 151b:: bottom surface
- 152:: first head heater
- 153:: first moving unit
- 160:: second electrode stack unit
- 161:: second suction head
- 162:: second head heater
- 163:: second moving unit
- 170:: holding mechanism
- 171:: first holding mechanism
- 172:: second holding mechanism
- 180:: press unit
- 181:: first pressing block
- 182:: second pressing block
- 183, 184:: press heater
- 190:: brushing unit
- 190a:: brushing body
- 190b:: brushing heating unit
- S:: stack
- A:: extended region of separator

### [Best Mode]

Hereinafter, exemplary embodiments of the present invention will be described in detail such that one skilled in the art to which the present invention belongs can readily implement the same. However, the present invention may be embodied in various different forms and is not limited to the configurations described herein.

When one part "includes", "comprises" or "has" one constituent element in the present specification, unless otherwise specifically described, this does not mean that another constitutional element is excluded but means that another constitutional element may be further included.

In the present specification, the "holding mechanism" serves to grip a stack stacked on a stack table in order to stack a first electrode or a second electrode during a process of manufacturing the stack in which the first electrode, the separator, and the second electrode are stacked in such a form that the first electrode and the second electrode are alternately arranged between respective folds of the separator on the stack table, and has a different function from a gripper that grips the stack during a process of heating and pressing the stack.

As used herein, "winding" refers to a process of wrapping the stack using a separator that is last stacked in a stack stacked in order to manufacture an electrode assembly. In this case, the separator may be wrapped while being in contact with at least one surface of the stack. To this end, a portion corresponding to a required length of the separator is defined as an "extended region" in the present specification.

As used herein, "stack in which a first electrode and a second electrode are alternately arranged between folds of the separator" may refer to an unfinished electrode assembly before heating and pressing the stack to complete an electrode assembly.

An exemplary embodiment of the present invention provides an electrode assembly manufacturing apparatus for manufacturing an electrode assembly in which a first electrode and a second electrode are alternately arranged between folds of a separator, the apparatus including: a first electrode supply unit configured to supply the first electrode to a stack table; a second electrode supply unit configured to supply the second electrode to the stack table; a separator supply unit configured to supply the separator to the stack table; the stack table on which the first electrode, the separator, and the second electrode are stacked in a form of a stack in which the separator last stacked on the stack table has an extended region so as to be wound while being in contact with at least one surface of the stack, and the first electrode and the second electrode are alternately arranged between the folds of the separator; a separator winding unit configured to perform winding such that the extended region for winding of the separator is in contact with at least one surface of the stack; and a brushing unit configured to brush the wound stack while heating the same.

The electrode assembly manufacturing apparatus according to the present invention has a feature that it includes a brushing unit configured to brush the wound stack while heating the same. The brushing unit brushes an entire surface of the extended region of the separator. That is, the brushing unit that performs brushing while heating can prevent the stacked separator from being wrinkled due to the influence of air space or static electricity, thus providing an electrode assembly with excellent performance.

In addition, since the electrode assembly can be manufactured in a continuous process without using a separate sub-member for fixing the electrode assembly, the time required to manufacture the electrode assembly can be shortened.

As used herein, "unit" refers to an interface that performs a specific function within the electrode assembly manufacturing apparatus.

As used herein, "brushing" refers to a process of smoothing out a surface of the wound stack for a short period of time using a heatable roller or the like.

In an exemplary embodiment of the present invention, the brushing unit includes a brushing body configured to be in direct contact with the wound stack and a brushing heating unit configured to heat the wound stack.

The brushing body may be provided in a form of a rotating roller or with bristles planted on one surface. Preferably, the brushing body may be provided with bristles planted on one surface of a plate.

The brushing heating unit may generate heat for heating the stack during brushing. Heating the stack can prevent the separator stacked on the electrode assembly from being wrinkled due to static electricity or air space, thereby providing an electrode assembly with excellent performance.

The electrode assembly manufacturing apparatus according to an exemplary embodiment of the present invention may further include a temperature control unit. The temperature control unit may control a temperature and a heating time for heating the stack during the brushing process. The temperature control unit may include a sensor for measuring a surface temperature of the stack.

That is, the electrode assembly manufacturing apparatus according to an exemplary embodiment of the present invention may further include a temperature control unit for enabling a process of brushing the wound stack while heating the same to proceed at temperatures of 100°C to 150°C, and preferably 100°C to 120°C for 2 to 10 seconds.

In an exemplary embodiment of the present invention, a press unit configured to heat and press the brushed stack, and a gripper configured to grip and move the brushed stack to the press unit may be further included. The gripper is different from the holding mechanism as described above, and may be the same as a gripper used in a first heat-press step as described below.

In an exemplary embodiment of the present invention, the press unit may include a pair of pressing blocks each including a heater.

In an exemplary embodiment of the present invention, the separator winding unit may include a clamp configured to grip an end of the extended region of the separator; a clamp moving unit configured to pull the gripped extended region of the separator in a direction opposite to a folded position of the separator; and a rotation unit configured to rotate the stack in which the extended region is pulled in a direction opposite to the folded position of the separator and gripped by the clamp. As the rotation unit rotates the stack, the stack can be wound with surrounding the same while the extended region of the separator is in contact with at least one surface of the stack. In this case, during the process of rotating the stack, the stack can be fixed with the holding mechanism or a gripper described below, if necessary.

The electrode assembly manufacturing apparatus according to an exemplary embodiment of the present invention may further include a separator cutting unit configured to cut the end of the extended region of the separator. Since the separator supplied from the separator supply unit may be in a form of a continuous separator sheet, it is necessary to cut the end of the extended region of the separator, and the clamp can grip the cut portion.

In an exemplary embodiment of the present invention, the press unit may include a pair of pressing blocks, and may be configured to surface-press the stack stacked on the table while moving the pair of pressing blocks in directions facing each other.

In the present specification, the separator may be supplied in a form of a separator sheet.

An exemplary embodiment of the present invention provides an electrode assembly manufacturing method for manufacturing an electrode assembly in which a first electrode and a second electrode are alternately arranged between folds of a separator, the electrode assembly manufacturing method including the steps of: supplying the first electrode to a stack table; supplying the second electrode to the stack table; supplying the separator to the stack table; manufacturing a stack including the first electrode, the separator, and the second electrode by stacking the first electrode, the separator, and the second electrode on the stack table such that the separator last stacked on the stack table has an extended region so as to be wound while being in contact with at least one surface of the stack, and the first electrode and the second electrode are alternately arranged between the folds of the separator; performing winding such that the extended region for winding of the separator is in contact with at least one surface of the stack; and brushing the wound stack while heating the same.

In the present specification, the stacking form that the first electrode and the second electrode are alternately arranged between folds of the separator is referred to as zigzag stacking.

The electrode assembly manufacturing method according to an exemplary embodiment of the present invention may further include the step of gripping the stack and conveying the stack for heating and pressing with a gripper. The gripper corresponds to a gripper that grips the stack in the process of heating and pressing the stack, and has a different function from the holding mechanism as described above.

In an exemplary embodiment of the present invention, the step of brushing the wound stack while heating the same is a step of, by a brushing unit, brushing a surface of the wound stack while heating the entire extended region for winding of the separator. In this case, the brushing unit may include a brushing body and a brushing heating unit, and the brushing body may be provided in a form of a rotating roller or with bristles planted on one surface or an outer surface.

Preferably, the brushing step may include the steps of bringing a brushing body into contact with the entire extended region for winding of the separator, the brushing body including a brushing heating unit and having bristles planted on one surface or an outer surface; moving the brushing body in the contact state in one direction while heating the stack with the brushing heating unit; and releasing the brushing body from the contact state. In this case, if there are two or more surfaces requiring brushing, the above steps can be performed on each surface.

In an exemplary embodiment of the present invention, the step of brushing the wound stack while heating the same may proceed at temperatures of 100°C to 150°C, and preferably 100°C to 120°C for 2 to 10 seconds.

The electrode assembly manufacturing method according to an exemplary embodiment of the present invention may further include a heat-press step of heating and pressing the brushed stack.

In an exemplary embodiment of the present invention, the step of manufacturing a stack including the first electrode, the separator, and the second electrode by stacking the first electrode, the separator, and the second electrode on the stack table such that the separator last stacked on the stack table has an extended region so as to be wound while being in contact with at least one surface of the stack, and the first electrode and the second electrode are alternately arranged between the folds of the separator may include the steps of:
(S1) stacking the second electrode on the stack table;
(S2) stacking the separator on the stack table such that the separator covers an upper surface of the second electrode stacked on the stack table;
(S3) stacking the first electrode on a surface of the separator covering the upper surface of the second electrode, which is opposite to a surface in contact with the second electrode;
(S4) additionally supplying the separator to cover an upper surface of the first electrode;
(S5) stacking the second electrode on a surface of the separator covering the upper surface of the first electrode, which is opposite to a surface in contact with the first electrode; and
(S6) additionally supplying the separator to cover an upper surface of the second electrode, and
may be configured to repeat the steps (S1) to (S6) one or more times, in which the separator last stacked may have an extended region so as to be wound while being in contact with at least one surface of the stack. That is, this case means a case where an electrode is first stacked on the stack table, and after the winding, the last electrode may be stacked.

In an exemplary embodiment of the present invention, the step of manufacturing a stack including the first electrode, the separator, and the second electrode by stacking the first electrode, the separator, and the second electrode on the stack table such that the separator last stacked on the stack table has an extended region so as to be wound while being in contact with at least one surface of the stack, and the first electrode and the second electrode are alternately arranged between the folds of the separator may include the steps of:
(SS1) stacking the separator on the stack table;
(SS2) stacking the first electrode on an upper surface of the separator;
(SS3) additionally supplying the separator to cover an upper surface of the first electrode;
(SS4) stacking the second electrode on a surface of the separator covering the upper surface of the first electrode, which is opposite to a surface in contact with the first electrode; and
(SS5) additionally supplying the separator to cover an upper surface of the second electrode, and
may be configured to repeat the steps (SS1) to (SS5) one or more times, in which the separator last stacked may have an extended region so as to be wound while being in contact with at least one surface of the stack. That is, this case means a case where a separator is first stacked on the stack table.

In an exemplary embodiment of the present invention, the step (S4), step (S6), step (SS3), and step (SS5), that is, the step of additionally supplying the separator to cover the upper surface of the first electrode or second electrode may be performed by one of a method in which the stack table is moved left and right, a method in which the separator is moved left and right, and a method in which the stack table is rotated.

In an exemplary embodiment of the present invention, the separator may be supplied in a form of a separator sheet. That is, the separator to be additionally supplied may be supplied in a continuous form. In addition, the "upper surface" may refer to a surface of the separator or electrode opposite to a surface facing the stack table.

That is, in order to stack the first electrode, the separator, and the second electrode such that the first electrode and the second electrode are alternately arranged between the folds of the separator, a method in which the stack table is moved left and right, a method in which the separator is moved left and right, or a method in which the stack table is rotated may be used, and general techniques in the relevant field may be applied to such methods.

In this case, the stack can be gripped by a holding mechanism to maintain alignment of the stack during the processes of adding the first electrode, the second electrode, and the separator, so that a stack in which the first electrode and the second electrode are alternately arranged between the folds of the separator can be manufactured.

As described above, the electrode assembly manufacturing method according to an exemplary embodiment of the present invention may further include a heat-press step of heating and pressing the brushed stack along a stacking axis.

In an exemplary embodiment of the present invention, the heat-press step of heating and pressing the brushed stack may include the steps of gripping the brushed stack with a gripper and moving the same to a space between a pair of pressing blocks each including a heater; removing the gripper from the stack; after removing the gripper, moving the pair of pressing blocks in directions approaching each other to surface-press the stack; and heating the stack by the heater.

Hereinafter, the stack heated and pressed in the heat-press step may refer to the brushed stack.

In addition, in an exemplary embodiment of the present invention, the heat-press step of heating and pressing the stack along the stacking axis may include the steps of moving the stack to a space between a pair of pressing blocks including a press heater; surface-pressing the stack by the pair of pressing blocks moving in directions facing each other along the stacking axis; and heating the stack by the press heater.

The electrode assembly manufacturing method according to an exemplary embodiment of the present invention may further include the step of stopping gripping of the gripper before the heat-press step.

More specifically, in an exemplary embodiment of the present invention, the heat-press step of heating and pressing the stack may include the steps of: a first heat-press step of gripping the stack with a gripper and heating and pressing the stack; and a second heat-press step of stopping the gripping of the gripper and heating and pressing the stack after the first heat-press step.

In an exemplary embodiment of the present invention, the first heat-press step may include the steps of fixing the stack by pressing an upper surface of the stack using a gripper; moving the stack fixed by the gripper to a space between a pair of pressing blocks including a press heater; surface-pressing the fixed stack by the pair of pressing blocks moving in directions facing each other along a stacking axis of the stack; and heating the fixed stack by the press heater.

In an exemplary embodiment of the present invention, the second heat-press step may include the steps of stopping heating and pressing the stack after the first heat-press step; spacing the gripper apart from the stack; moving the stack from which the gripper is spaced apart to a space between a pair of pressing blocks including a press heater; pressing the stack by the pair of pressing blocks moving in directions facing each other along a stacking axis of the stack from which the gripper is spaced apart; and heating the stack by the press heater.

In an exemplary embodiment of the present invention, the pressing blocks used in the first heat-press step may have a groove corresponding to the gripper.

In an exemplary embodiment of the present invention, the step of spacing the gripper apart from the stack may include the steps of stopping pressing the upper surface of the stack using the gripper; and spacing the gripper apart from the stack.

In addition, the step of moving the stack to a space between the pair of pressing blocks including the press heater in the heat-press step (including the first heat-press step and the second heat-press step) may include not only moving only the stack itself but also moving the stack together with the stack table in a state in which the stack is placed on the stack table. In this case, a target to be heated and pressed by the pair of pressing blocks and the press heater may refer to the stack and the stack table.

In an exemplary embodiment of the present invention, the first heat-press step may be configured to heat and press the stack under a temperature condition of 65°C to 90°C and a pressure condition of 1 MPa to of 3 MPa for 10 seconds to 30 seconds. More preferably, the stack may be heated and pressed for 10 seconds to 20 seconds under a temperature condition of 65°C to 75°C and a pressure condition of 1.5 MPa to of 2 MPa.

In an exemplary embodiment of the present invention, the second heat-press step may be configured to heat and press the stack under a temperature condition of 50°C to 90°C and a pressure condition of 1 MPa to of 6 MPa for 5 seconds to 60 seconds, preferably under a temperature condition of 65°C to 90°C and a pressure condition of 1.5 MPa to of 6 MPa for 5 seconds to 30 seconds. More preferably, the stack may be heated and pressed for 7 seconds to 25 seconds under a temperature condition of 65°C to 85°C and a pressure condition of 3 MPa to of 5.5 MPa.

When heated and pressed while satisfying the conditions described above, the adhesion of the electrodes and separator of the stack including the first electrode, the separator, and the second electrode may be easily obtained without damaging the first electrode, the separator, and the second electrode, and performance of the manufactured electrode assembly may be excellent.

Additionally, in an exemplary embodiment of the present invention, the conditions of the second heat-press described above may be applied to the temperature condition, pressure condition, and time condition of the heat-press step. That is, the heat-press step may be configured to heat and press the stack under a temperature condition of 50°C to 90°C and a pressure condition of 1 MPa to of 6 MPa for 5 seconds to 60 seconds, preferably under a temperature condition of 65°C to 90°C and a pressure condition of 1.5 MPa to of 6 MPa for 5 seconds to 30 seconds. More preferably, the stack may be heated and pressed for 7 seconds to 25 seconds under a temperature condition of 65°C to 85°C and a pressure condition of 3 MPa to of 5.5 MPa.

In an exemplary embodiment of the present invention, the step of brushing the wound stack while heating the same may be performed only in a region of the stack where the winding has been done.

In an exemplary embodiment of the present invention, the step of performing winding such that the extended region for winding of the separator is in contact with at least one surface of the stack may include the steps of gripping an end of the extended region of the separator last stacked; pulling the gripped extended region of the separator in a direction opposite to a folded position of the separator; and rotating the stack in which the extended region is pulled in the direction opposite to the folded position of the separator and gripped. By rotating the stack as described above, the stack can be wound with surrounding the same while the extended region of the separator is in contact with at least one surface of the stack. The end of the extended region can be gripped by the above-described clamp, and the step of rotating the stack can be done by the above-described rotation unit and holding mechanism or gripper.

Hereinafter, an electrode assembly manufacturing apparatus and an electrode assembly manufacturing method according to an exemplary embodiment of the present invention will be described in more detail.

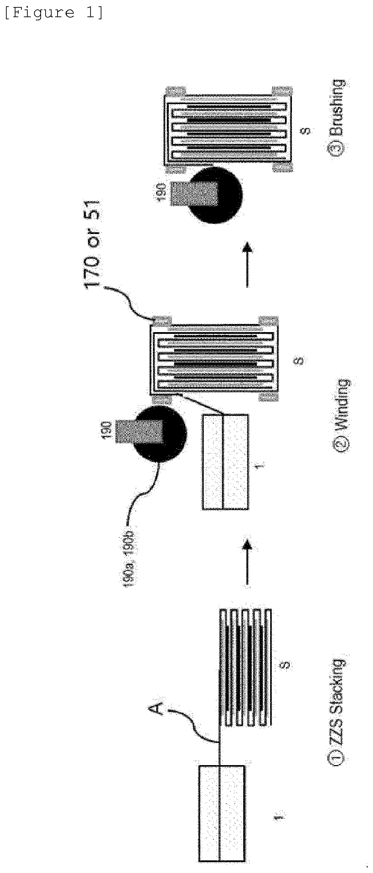

FIG. 1 is a flowchart schematically showing the step of applying a brushing unit or a brushing method according to an exemplary embodiment of the present invention. Specifically, an electrode assembly 10 is stacked, and an end of a separator 14 last stacked is cut with a separator cutting unit (not shown). With the cutting, an extended region A of the separator can be formed. Then, the end of the extended region A of the separator 14 last stacked may be gripped by a clamp 1. While holding the gripping of the clamp 1, the stack S is rotated using a rotation unit (not shown). With this, the extended region A of the separator 14 last stacked comes into contact with at least one surface of the stack S and surrounds the stack S, thus completing winding. In this process, if necessary, the stack S may be fixed using a holding mechanism 170 or a gripper 51.

When the winding is completed, a brushing unit 190 may move in a direction of the stack S to perform brushing. Specifically, a brushing body 190a including a brushing heater 190b is brought into contact with a surface of the wound stack S, and brushing can be performed by moving the brushing body 190a in the contact state in one direction while heating the stack S by the brushing heater 190b. In this case, if there are two or more surfaces requiring brushing, the brushing can be performed on each surface. When the brushing is completed, the brushing body 190a can be released from the contact state. That is, a distance between the brushing body and the stack can be increased by moving the brushing unit 190. In this case, the heating temperature may satisfy the above-described temperature range.

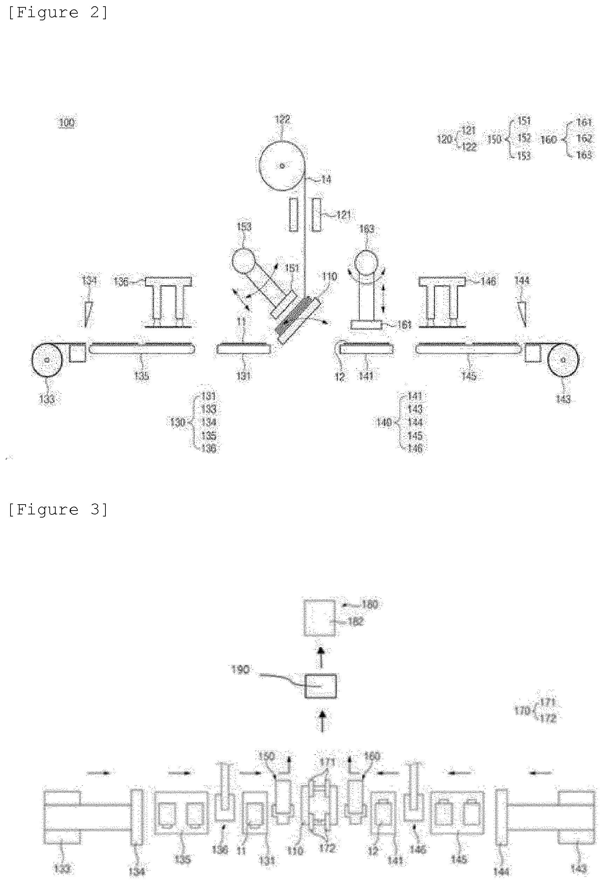

FIG. 2 is a plan view illustratively showing an electrode assembly manufacturing apparatus according to an exemplary embodiment of the present invention, and FIG. 3 is a front view showing a concept of the electrode assembly manufacturing apparatus according to the exemplary embodiment of the present invention. Here, for convenience, in FIG. 2, a holding mechanism 170 and a press unit 180 shown in FIG. 3 are omitted, and in FIG. 3, a separator supply unit 120 shown in FIG. 2 is omitted.

Referring to FIGS. 2 and 3, an electrode assembly manufacturing apparatus 100 an according to an exemplary embodiment of the present invention includes a stack table 110, a separator supply unit 120 that supplies a separator 14 while heating the separator, a first electrode supply unit 130 that supplies a first electrode 11 while heating the first electrode, a second electrode supply unit 140 that supplies a second electrode 12 while heating the second electrode, a first electrode stack unit 150 that stacks the first electrode 11 on the stack table 110, a second electrode stack unit 160 that stacks the second electrode 12 on the stack table 110, and a press unit 180 that adheres the first electrode 11, the separator 14, and the second electrode 12 therebetween. In addition, the electrode assembly manufacturing apparatus 100 according to an exemplary embodiment of the present invention may further include a holding mechanism 170 for fixing the first electrode 11 and the second electrode 12 when they are stacked on the stack table 110. In addition, the electrode assembly manufacturing apparatus includes a brushing unit 190 that brushes a surface of the stack while heating the same after winding the stack.

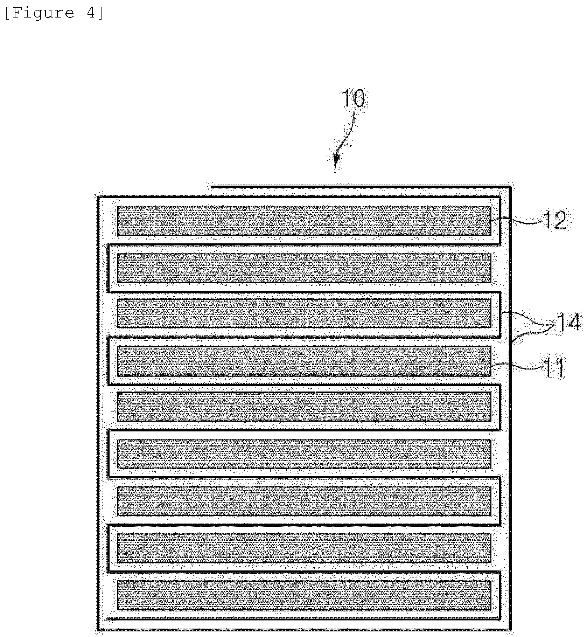

FIG. 4 is a cross-sectional view illustratively showing an electrode assembly manufactured through an electrode assembly manufacturing apparatus or an electrode assembly manufacturing method according to an exemplary embodiment of the present invention.

Referring to FIGS. 1 to 4, the electrode assembly manufacturing apparatus 100 according to an exemplary embodiment of the present invention is an apparatus that stacks the first electrode 11, the separator 14, and the second electrode 12 to manufacture an electrode assembly 10.

Referring to FIG. 3, the electrode assembly 10 is a chargeable/dischargeable power generating element, and may be formed in such a shape that the first electrode 11, the separator 14, and the second electrode 12 are alternately stacked and assembled. Here, the electrode assembly 10 may have such a form that the separator 14 is folded in a zigzag shape, for example, and the first electrode 11 and the second electrode 12 are alternately arranged between the folds of the separator 14. In this case, the electrode assembly 10 may be provided in such a form that the separator 14 surrounds the outermost of the electrode assembly. That is, the electrode assembly may be provided in a wound state. More specifically, after completing the winding of the unfinished electrode assembly, brushing may be performed as described with respect to FIG. 1, and the unfinished electrode assembly may be heated and pressed to complete the electrode assembly 10.

Note that the first electrode supply unit 130 may further include a first electrode roll 133 on which the first electrode 11 is wound in the form of a sheet, a first cutter 134 that cuts the first electrode 11 at regular intervals to form first electrodes 11 with a predetermined size when the first electrode 11 in the form of a sheet wound on the first electrode roll 133 is unwound and supplied, a first conveyor belt 135 that moves the first electrodes 11 cut by the first cutter 134, and a first electrode supply head 136 that vacuum-suctions the first electrodes 11 being conveyed by the first conveyor belt 135 to seat the same on the first electrode seating table 131. Here, the first cutter 134 may cut the sheet-like first electrode 11 so that a first electrode lead or a first electrode tab is formed to protrude at an end portion.

The second electrode supply unit 140 may further include a second electrode roll 143 on which the second electrode 12 is wound in the form of a sheet, a second cutter 144 that cuts the second electrode 12 at regular intervals to form second electrodes 12 with a predetermined size when the second electrode 12 in the form of a sheet wound on the second electrode roll 143 is unwound and supplied, a second conveyor belt 145 that moves the second electrodes 12 cut by the second cutter 144, and a second electrode supply head 146 that vacuum-suctions the second electrodes 12 being conveyed by the second conveyor belt 145 to seat the same on the second electrode seating table 141. Here, the second cutter 144 may cut the sheet-like second electrode 12 so that a second electrode lead or a second electrode tab is formed to protrude at an end portion.

Referring to FIGS. 1 to 4 with respect to an operation of the electrode assembly manufacturing apparatus 100 according to an exemplary embodiment of the present invention, the separator 14 wound on the separator roll 122 passes through the separator heating unit 121 and supplied. That is, the separator 14 is heated while passing through the separator heating unit 121, and the heated separator 14 is supplied to the stack table 110. The separator 14 supplied in this way is stacked on the stack table 110, and the separator 14 is heated by the heated stack table 110.

Then, when the first electrode 11 is heated and supplied from the first electrode supply unit 130 to the first electrode stack unit 150, the first electrode 11 is stacked on an upper surface of the separator 14 stacked on the stack table 110 by the first electrode stack unit 150 while being heated.

In this case, the holding mechanism 170 presses and fixes an upper surface of the first electrode 11 so that the first electrode 11 does not separate from the stack table 110.

Then, when the stack table 110 is rotated in a direction of the second electrode stack unit 160, the separator 14 is continuously supplied and covers the upper surface of the first electrode 11.

Then, the second electrode 12 heated and supplied from the second electrode supply unit 140 is stacked on the portion of the separator 14 covering the upper surface of the first electrode 11 by the second electrode stack unit 160. Here, the second suction head 161 in the second electrode stack unit 160 presses and heats the second electrode 12 to continuously heat the second electrode 12.

In this case, after the holding mechanism 170 pressing the upper surface of the first electrode 11 is separated from the pressing portion, the upper surface of the second electrode 12 is pressed so that the stack including the second electrode 12 does not separate from the stack table 110.

Then, while the processes of stacking the first electrode 11 and the second electrode 12 are repeated, the separator 14 is folded in a zig zag manner, resulting in a stack in which the separator 14 is positioned between the first electrode 11 and the second electrode 12. In this case, the stack may be provided in such a form that an extended region of the separator 14 wraps around the outermost of the stack using an extended region of the separator last stacked. In this case, the extended region of the separator 14 may not completely cover all surfaces of the stack. After completing the winding of the stack, brushing is performed as described with respect to FIG. 1, and the stack is heated and pressed with the press unit 180 as described later, thus allowing the electrode assembly 10 to be finished.

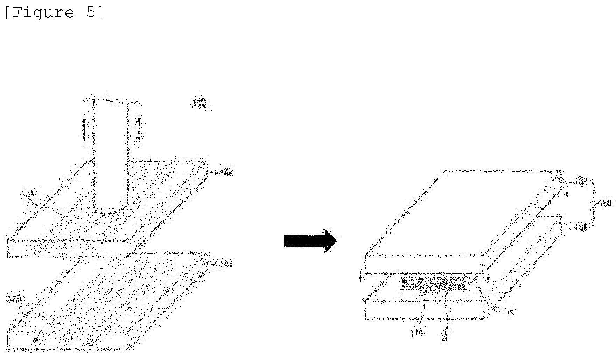

FIG. 5 is a perspective view illustratively showing a press unit of an electrode assembly manufacturing apparatus according to an exemplary embodiment of the present invention and a state in which the press unit presses a stack in the electrode assembly manufacturing apparatus according to the exemplary embodiment of the present invention.

Referring to FIGS. 1 to 3 and 5, the stack S manufactured as described above is moved to the press unit 180, and the stack S is heated and pressed in the press unit 180, thus adhering the heated first electrode 11, separator 14, and second electrode 12 therebetween to manufacture the electrode assembly 10. In this case, the heated first electrode 11, separator 14, and second electrode 12 are heated and pressed therebetween by the press unit 180 and can be thus thermally fused. The stack manufactured here refers to a stack in which winding and brushing have been completed in the manner described with respect to FIG. 1.

The electrode assembly manufacturing apparatus 100 according to an exemplary embodiment of the present invention configured as described above heats and stacks the first electrode 11, the separator 14, and the second electrode 12, and heats and presses the stack by the press unit 180 to adhere the first electrode 11, the separator 14, and the second electrode 12 therebetween, thus preventing the electrode assembly 10 from being unfolded, and the stacking positions of the first electrode 11 and the second electrode 12 from being misaligned in the electrode assembly 10.

More specifically, the press unit 180 may include a pair of pressing blocks 181 and 182, and the stack of the first electrode 11, the separator 14, and the second electrode 12 may be arranged between the pair of pressing blocks 181 and 182. Then, the pair of pressing blocks 181 and 182 are moved in directions facing each other, and the press unit 180 heats and presses the stack, thus adhering the stacked first electrode 11, separator 14, and second electrode 12 therebetween.

In addition, the press unit 180 may further include press heaters 183 and 184 for heating the pair of pressing blocks 181 and 182, so that the pair of pressing blocks 181 and 182 can heat and press the stack. Accordingly, thermal fusion among the first electrode 11, the separator 14, and the second electrode 12 in the stack can be better achieved, resulting in more robust adhesion.

The pair of pressing blocks 181 and 182 may have a pressing surface, and horizontal and vertical lengths of the pressing surface may be greater than horizontal and vertical lengths of the stack. The pair of pressing blocks 181 and 182 may include a first pressing block 181 and a second pressing block 182, and the first pressing block 181 and the second pressing blocks 182 may be provided as rectangular blocks having a rectangular parallelepiped shape.

In addition, the press unit may further include a pair of the pressing blocks and a press heater for heating the pressing blocks, in which the pair of pressing blocks may move in directions facing each other to surface-press the stack and the press heater may heat the stack.

In this case, in an exemplary embodiment of the present invention, the pair of the pressing blocks may include the press heater therein.

In an exemplary embodiment of the present invention, the press unit may include a first press unit and a second press unit. Specifically, the first press unit and the second press unit may be applied to the first heat-press step and the second heat-press step described above, respectively, and the above-described descriptions may be applied.

In an exemplary embodiment of the present invention, the first press unit may include a pair of first pressing blocks, pressing surfaces of the pair of first pressing blocks may include a groove of a shape corresponding to the gripper, and the pressing surfaces other than the grooves may be provided as planar surfaces. That is, the first press unit may be applied in the first heat-press step described above.

In an exemplary embodiment of the present invention, the second press unit may include a pair of second pressing blocks, and pressing surfaces of the pair of second pressing blocks may be provided as planar surfaces. That is, the second press unit may be applied in the second heat-press step described above.

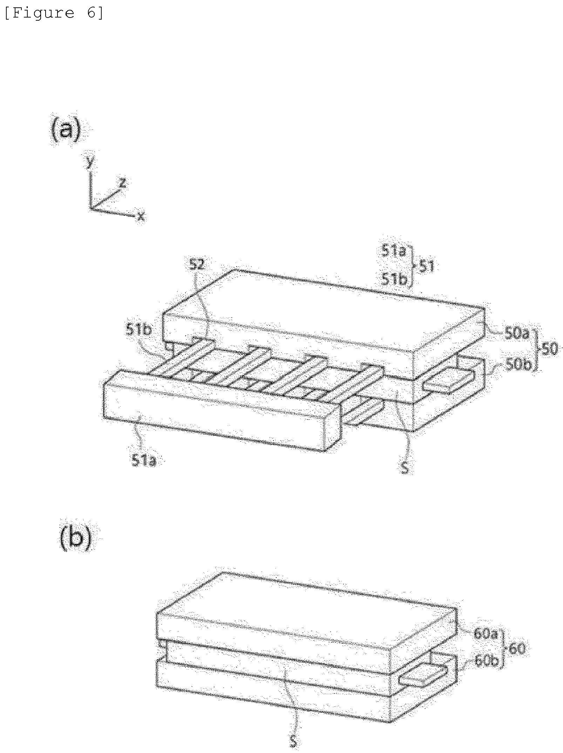

FIG. 6(a) is a perspective view showing a first press unit 50 according to an exemplary embodiment of the present invention, and FIG. 6(b) is a perspective view showing a second press unit 60 according to an exemplary embodiment of the present invention.

Referring to FIG. 6(a), the first press unit 50 may heat and press the stack S while the stack S is fixed by a gripper 51. The first press unit 50 is composed of a pair of first pressing blocks 50a and 50b, and the pair of first pressing blocks 50a and 50b has pressing surfaces for pressing, which are all planar surfaces except for a groove of a shape corresponding to a fixing portion 51b of the gripper 51.

The gripper 51 may include a main body 51a having dimensions corresponding to a length (x) and a height (y) of the stack S or greater than the length (x) and height (y) of the stack S, and a plurality of fixing portions 51b each provided on one surface of the main body 51a in the form of a pillar or a plate extending along a width (z) direction of the stack S. Here, the length (x) of the stack S may refer to a portion of the stack with the longest distance from one end to the other end of the stack S, the height (y) may refer to a distance in a stacking direction of the stack S, and the width (z) may refer to a distance horizontally crossing an upper surface of the stack S.

The fixing portions 51b can be position-adjusted along the height direction of the main body 51a, so that the fixing portions 51b can fix the stack S while being in contact with upper and lower surfaces of the stack S.

Then, the pair of first pressing blocks 50a and 50b included in the first press unit 50 are moved in directions facing each other to surface-press one or more of the stack S and the gripper 51, making it possible to adhere the electrodes and the separator included in the stack S.

Referring to FIG. 6(b), the second press unit 60 may finally heat and press the stack S that has been primarily heated and pressed by the first press unit 50. The second press unit 60 includes a pair of second pressing blocks 60a and 60b, and the pair of pressing blocks 61 and 62 can be moved in directions facing each other to surface-press the stack S. In addition, the pair of second pressing blocks 60a and 60b included in the second press unit 60 may have pressing surfaces for pressing in contact with the stack S, which are all planar surfaces.

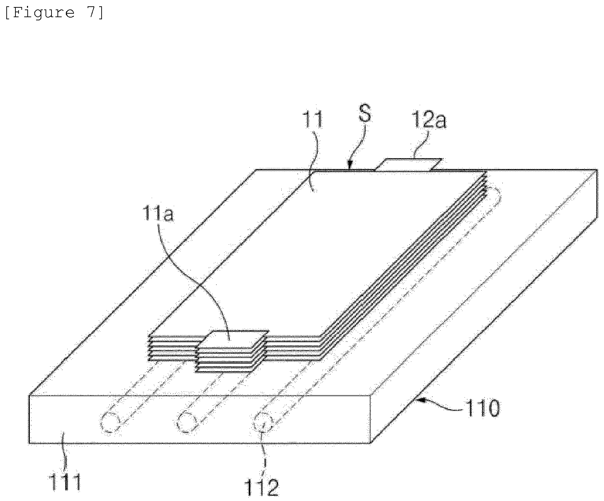

Referring to FIGS. 1 to 3 and 7, the first electrode 11, the separator 14 and the second electrode 12 may be stacked on the stack table 110 in the form of the first electrode 11 and the second electrode 12 being alternately arranged between respective folds of the separator 14.

In addition, the stack table 110 may include a table body 111 on which the first electrode 11, the separator 14, and the second electrode 12 are stacked and a stack table heater 112 that heats the stacked stack S by heating the table body 111.

The first electrode 11 may be configured as a positive electrode, and the second electrode 12 may be configured as a negative electrode, but the present invention is not necessarily limited thereto. For example, the first electrode 11 may be configured as a negative electrode, and the second electrode 12 may be configured as a positive electrode.

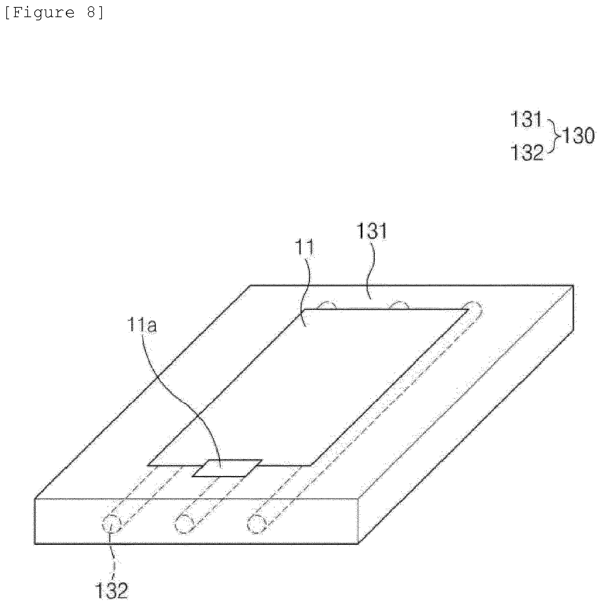

FIG. 8 is a perspective view showing a first electrode seating table in the electrode assembly manufacturing apparatus according to the exemplary embodiment of the present invention.

Referring to FIGS. 1 to 3 and 8, the first electrode supply unit 130 may supply the first electrode 11 to the first electrode stack unit 150 while heating the first electrode 11.

In addition, the first electrode supply unit 130 may include a first electrode seating table 131 on which the first electrode 11 is seated before being stacked on the stack table 110 by the first electrode stack unit 150 and a first electrode heater 132 that heats the first electrode 11 by heating the first electrode seating table 131.

Note that the first electrode supply unit 130 may further include a first electrode roll 133 on which the first electrode 11 is wound in the form of a sheet, a first cutter 134 that cuts the first electrode 11 at regular intervals to form first electrodes 11 with a predetermined size when the first electrode 11 in the form of a sheet wound on the first electrode roll 133 is unwound and supplied, a first conveyor belt 135 that moves the first electrodes 11 cut by the first cutter 134, and a first electrode supply head 136 that vacuum-suctions the first electrodes 11 being conveyed by the first conveyor belt 135 to seat the same on the first electrode seating table 131. Here, the first cutter 134 may cut the sheet-like first electrode 11 so that a first electrode tab 11a is formed to protrude at an end portion.

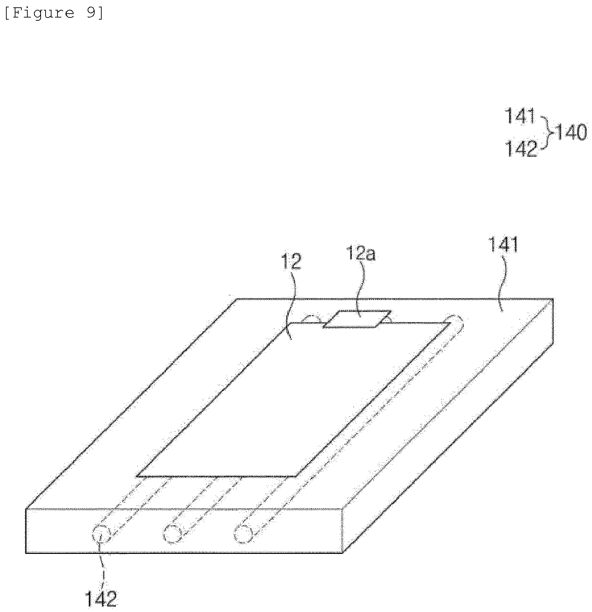

FIG. 9 is a perspective view showing a second electrode seating table in the electrode assembly manufacturing apparatus according to the exemplary embodiment of the present invention.

Referring to FIGS. 1 to 3 and 9, the second electrode supply unit 140 may supply the second electrode 12 to the second electrode stack unit 160 while heating the second electrode 12.

In addition, the second electrode supply unit 140 may include a second electrode seating table 141 on which the second electrode 12 is seated before being stacked on the stack table 110 by the second electrode stack unit 160 and a second electrode heater 142 that heats the second electrode 12 by heating the second electrode seating table 141.

Note that the second electrode supply unit 140 may further include a second electrode roll 143 on which the second electrode 12 is wound in the form of a sheet, a second cutter 144 that cuts the second electrode 12 at regular intervals to form second electrodes 12 with a predetermined size when the second electrode 12 in the form of a sheet wound on the second electrode roll 143 is unwound and supplied, a second conveyor belt 145 that moves the second electrodes 12 cut by the second cutter 144, and a second electrode supply head 146 that vacuum-suctions the second electrodes 12 being conveyed by the second conveyor belt 145 to seat the same on the second electrode seating table 141. Here, the second cutter 144 may cut the sheet-like second electrode 12 so that a second electrode tab 12a is formed to protrude at an end portion.

In an exemplary embodiment of the present invention, the first electrode stack unit may include a first suction head for vacuum-suctioning the first electrode seated on the first electrode seating table, and the second electrode stack unit may include a second suction head for vacuum-suctioning the second electrode seated on the second electrode seating table.

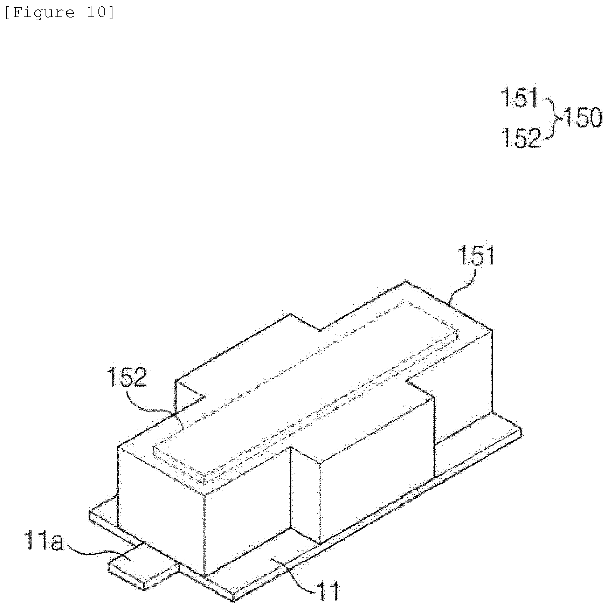

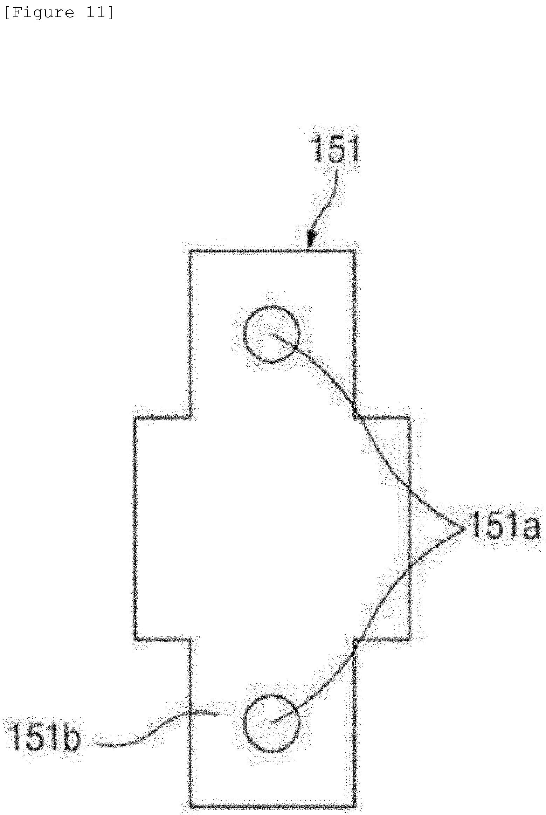

FIG. 10 is a perspective view showing a first suction head in the electrode assembly manufacturing apparatus according to the exemplary embodiment of the present invention, and FIG. 11 is a bottom view showing the first suction head in the electrode assembly manufacturing apparatus according to the exemplary embodiment of the present invention.

Referring to FIGS. 1 to 3, 10, and 11, the first electrode stack unit 150 may stack the first electrode 11 on the stack table 110.

In addition, the first electrode stack unit 150 may include a first suction head 151 and a first moving unit 153.

The first suction head 151 can vacuum-suction the first electrode 11 seated on the first electrode seating table 131. In this case, the first suction head 151 has a vacuum suction hole 151a formed on a bottom surface 151b, and can suction the first electrode 11 through the vacuum suction hole 151a to fix the first electrode 11 to the bottom surface 151b of the first suction head 151. Here, the first suction head 151 may be formed therein with a passage connecting the vacuum suction hole 151a and a vacuum suction device (not shown).

The first moving unit 153 can move the first suction head 151 to the stack table 110 so that the first suction head 151 can stack the first electrode 11 seated on the first electrode seating table 131 on the stack table 110.

In addition, the second electrode stack unit 160 can stack the second electrode 12 on the stack table 110. Here, the second electrode stack unit 160 may have the same structure as the first electrode stack unit 150 described above. In this case, the second electrode stack unit 160 may include a second suction head 161 and a second moving unit 163.

The second suction head 161 can vacuum-suction the second electrode 12 seated on the second electrode seating table 141.

The second moving unit 163 can move the second suction head 161 to the stack table 110 so that the second suction head 161 can stack the second electrode 12 seated on the second electrode seating table 141 on the stack table 110.

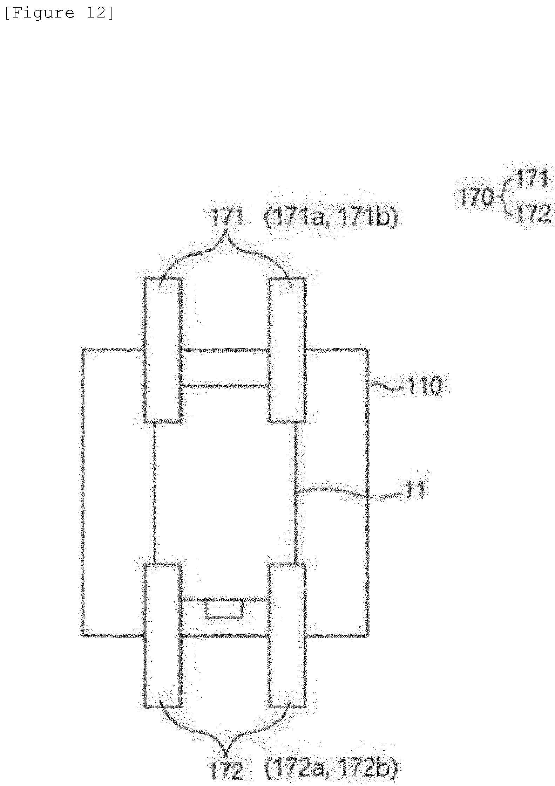

FIG. 12 is a plan view showing a holding mechanism and a stack table in the electrode assembly manufacturing apparatus according to the exemplary embodiment of the present invention.

Referring to FIGS. 1 to 3 and 12, when the first electrode 11 or the second electrode 12 is stacked on the stack table 110, a holding mechanism 170 can fix the first electrode 11 or the second electrode 12 to the stack table 110 while gripping the first electrode 11 or the second electrode 12.

In addition, the holding mechanism 170 can press and fix an upper surface of the first electrode 11 stacked on the uppermost side on the stack table 110 when stacking the first electrodes 11 on the stack table 110, and can press and fix an upper surface of the second electrode 12 stacked on the uppermost side on the stack table 110 when stacking the second electrodes 12 on the stack table 110. Furthermore, the holding mechanism can press and fix an upper surface of a stack of the first electrode 11, the separator 14, and the second electrode 12 stacked on the stack table 110.

That is, when forming the stack while positioning and stacking the first electrode 11 and the second electrode 12 between the folds of the separator 14, the holding mechanism 170 grips the uppermost surface of the stack in a manner of pressing the same toward the stack table 110, making it possible to prevent the stack from being separated from the stack table 110.

Note that the holding mechanism 170 may include, for example, a first holding mechanism 171 and a second holding mechanism 172, and can fix both sides of the first electrode 11 or the second electrode 12.

In an example where the zigzag folding is performed while the stack table 110 is rotated as described above, when the holding mechanism 170 grips the first electrode 11 or the second electrode 12 and then the stack table 110 is rotated, the separator 14 may be unwound from the separator roll 122 in proportion to a rotation amount of the stack table 110 and supplied to the stack table 110 side.

Note that, for example, the holding mechanism 170 and the stack table 110 may be connected or coupled to a rotating device (not shown). Here, when the holding mechanism 170 grips the first electrode 11 or the second electrode 12, the rotating device can rotate the holding mechanism 170 and the stack table 110.

Then, when the stack in which the first electrode 11 and the second electrode 12 are positioned between the folds of the separator 14 is completed, the stack may be provided in such a form that an extended region of the separator 14 wraps around the outermost of the stack using an extended region of the separator last stacked. In this case, the extended region of the separator 14 may not completely cover all surfaces of the stack. After completing the winding of the stack, brushing may be performed as described with respect to FIG. 1, and the top and bottom surfaces of the brushed stack may be heated and pressed by the press unit described above.

An electrode assembly manufacturing apparatus according to another exemplary embodiment of the present invention may further include a vision device for inspecting the first electrode or the second electrode.

That is, the electrode assembly manufacturing apparatus according to another exemplary embodiment of the present invention may include a stack table, a separator supply unit for supplying a separator to the stack table, a first electrode supply unit for supplying a first electrode to the stack table, a second electrode supply unit for supplying a second electrode to the stack table, a first electrode stack unit for stacking the first electrode on the stack table, a second electrode stack unit for stacking the second electrode on the stack table, a press unit for adhering the first electrode, the separator, and the second electrode 12 therebetween, and a holding mechanism for fixing the first electrode and the second electrode when they are stacked on the stack table, and further include a rotation unit for rotating the stack table and a vision device for vision inspecting the first electrode and the second electrode. That is, compared to the electrode assembly manufacturing apparatus according to the exemplary embodiment described above, there is a difference in that the rotation unit and the vision device are further included.

More specifically, in the electrode assembly manufacturing apparatus according to another exemplary embodiment of the present invention, the vision device may include a first camera and a second camera.

The first camera (not shown) may capture a first electrode seated on the first electrode seating table from the first electrode supply unit 130, and the second camera may capture a second electrode seated on the second electrode seating table from the second electrode supply unit.

A stacking quality of the first electrode and the second electrode can be inspected through image information obtained through the capturing of the first camera and the second camera. In this case, seating positions, sizes, stacking states, and the like of the first electrode and second electrode can be inspected.

The rotation unit can rotate the stack table in one direction and the other direction. Here, the first electrode stack unit may be provided on one side of the rotation unit, and the second electrode stack unit may be provided on the other side of the rotation unit. Additionally, the rotation unit may rotate the stack table toward one side so as to face the first suction head when stacking the first electrode and rotate the stack table toward the other side so as to face the second suction head when stacking the second electrode.

Furthermore, the rotation unit may alternately rotate the stack table in a direction of the first electrode stack unit and a direction of the second electrode stack unit, thereby enabling zig zag folding in such a way that the separator is positioned between the first electrode and the second electrode.

For reference, in order to stack the first electrode, the separator, and the second electrode such that the first electrode and the second electrode are alternately arranged between the folds of the separator, a method in which the stack table is moved left and right, a method in which the separator is moved left and right, or a method in which the stack table is rotated may be used, and general techniques in the relevant field may be applied to such methods.

In an exemplary embodiment of the present invention, a long side of the electrode assembly may have a length of 500 mm or longer. The long side of the electrode assembly refers to a length perpendicular to the supply direction of the separator supplied during manufacturing of the electrode assembly.

In an exemplary embodiment of the present invention, the negative electrode current collector has a thickness of 3 to 500 µm, for example. Such a negative electrode current collector is not particularly limited as long as it has conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, like a positive electrode current collector described below, the negative electrode current collector may have microscopic irregularities formed on a surface to enhance an adhesive force of a negative electrode active material, and may be used in various forms such as a film, a sheet, a foil, a net, a porous body, a foamed body, or a non-woven fabric body.

As the negative electrode active material, for example, carbon such as non-graphitizable carbon and graphite-based carbon; metal composite oxides such as LixFe₂O₃ (0≤x≤1), LiₓWO₂ (0≤x≤1), and SnₓMe₁₋ₓMe'_{y}O_{z} (Me: Mn, Fe, Pb, Ge; Me': Al, B, P, Si, elements of Groups 1, 2 and 3 of the periodic table, and halogens; 0<x≤1; 1≤y≤3; 1≤z≤8); lithium metal; a lithium alloy; a silicon-based alloy; a tin-based alloy; an oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; a conductive polymer such as polyacetylene; a Li-Co-Ni based material, and the like may be used.

In an exemplary embodiment of the present invention, the lower layer region may include natural graphite as a negative electrode active material, and the upper layer region may include artificial graphite as a negative electrode active material.

In an exemplary embodiment of the present invention, the lower layer region and the upper layer region may each independently further include a silicon-based compound as a negative electrode active material.

In an exemplary embodiment of the present invention, the silicon-based compound may include one or more of SiOₓ (0≤x≤2) and SiC.

In an exemplary embodiment of the present invention, the silicon-based compound may include one or more of SiOₓ (x=0), SiOₓ (0≤x≤2) and SiC.

In an exemplary embodiment of the present invention, the silicon-based compound may include 70 parts by weight or more or 80 parts by weight or more of SiOₓ (x=0) based on 100 parts by weight of the silicon-based compound. That is, the negative electrode of the present invention is characterized in that a content of pure Si is high.

In an exemplary embodiment of the present invention, the negative electrode may be manufactured by applying and drying a slurry for a lower layer containing a negative electrode active material for a lower layer on a current collector to form a lower layer region, and then applying and drying a slurry for an upper layer containing a negative electrode active material for an upper layer on the lower layer region to form an upper layer region.

That is, an exemplary embodiment of the present invention may provide a negative electrode manufacturing method including the steps of preparing a slurry for a lower layer containing a negative electrode active material for a lower layer and a slurry for an upper layer containing a negative electrode active material for an upper layer; coating the slurry for a lower layer on one surface of a negative electrode current collector and coating the slurry for an upper layer on the slurry for a lower layer simultaneously or with a predetermined time interval; and forming an active material layer by simultaneously drying the coated slurry for a lower layer and slurry for an upper layer.

In this case, a mixed region (intermixing) in which the different types of active materials are mixed may be present at a portion of the negative electrode where the lower layer region and the upper layer region are in contact with each other. This is because a predetermined mixed zone occurs on an interface where the slurry for a lower layer and the slurry for an upper layer come into contact with each other before drying and then the mixed zone is formed in a form of a layer of a mixed region as drying proceeds when the active material layer is formed in a manner of coating the slurry for a lower layer containing the negative electrode active material for a lower layer and the slurry for an upper layer containing the negative electrode active material for an upper layer on the current collector simultaneously or continuously with a very small time interval and then drying the slurries at the same time.

In an exemplary embodiment of the present invention, in the active material layer of the negative electrode, a weight ratio (or ratio of loading amounts per unit area) of the upper layer region and the lower layer region may be 20:80 to 50:50, and specifically 25:75 to 50:50.

Thicknesses of the lower layer region and upper layer region of the active material layer of the negative electrode of the present invention may not completely match thicknesses of the coated slurry for a lower layer and the coated slurry for an upper layer. However, as a result of the drying or selective rolling process, the ratio of thicknesses of the lower layer region and upper layer region of the active material layer of the finally obtained negative electrode of the present invention may match a ratio of thicknesses of the coated slurry for a lower layer and the coated slurry for an upper layer

In an exemplary embodiment of the present invention, in the step of coating the slurry for a lower layer on one surface of the negative electrode current collector and coating the slurry for an upper layer on the slurry for a lower layer simultaneously or with a predetermined time interval, the predetermined time interval may be a time interval of 0.6 second or less, 0.02 second to 0.6 second, or 0.02 second to 0.06 second, or 0.02 second to 0.03 second. Most preferably, the time interval may be 0 second. That is, it may be most desirable to perform the coating simultaneously. That is, since the time interval between coating the slurry for a lower layer and coating the slurry for an upper layer is due to coating equipment, it may be more preferable to coat the slurry for a lower layer and the slurry for an upper layer at the same time. In this case, a method of coating the slurry for a lower layer and the slurry for an upper layer may use a device such as a double slot die.

In an exemplary embodiment of the present invention, the step of forming an active material layer by simultaneously drying the coated slurry for a lower layer and slurry for an upper layer may include the steps of simultaneously drying the coated slurry for a lower layer and slurry for an upper layer; and rolling the active material layer after the drying step. In this case, the rolling step may be performed by a method commonly used in the art, such as roll pressing, and may be performed at a pressure of 1 MPa to 20 MPa and a temperature of 15°C to 30°C, but the present invention is not limited thereto.

In this case, the step of forming an active material layer by simultaneously drying the coated slurry for a lower layer and slurry for an upper layer may be performed using a device that combines hot air drying and infrared drying devices and a method commonly used in the art.

In an exemplary embodiment of the present invention, wt% of a first binder polymer in the solid content of the slurry for a lower layer may be equal to or greater than wt% of a second binder polymer in the solid content of the slurry for an upper layer.

Specifically, in an exemplary embodiment of the present invention, wt% of the first binder polymer in the solid content of the slurry for a lower layer may be 1.0 to 4.2 times, 1.5 to 3.6 times, or 1.5 to 3 times greater than wt% of the second binder polymer in the solid content of the slurry for an upper layer.

In this case, when the ratio of wt% of the first binder in the coated slurry for a lower layer and wt% of the second binder in the coated slurry for an upper layer satisfies such a range, the binder in the lower layer region is not too little and thus the electrode layer is not detached, and the binder in the upper layer region is not too much, which reduces the resistance of the upper layer of the electrode and is advantageous for rapid charging performance.

In an exemplary embodiment of the present invention, wt% of the first binder polymer in the solid content of the slurry for a lower layer may be 2 to 30 wt%, or 5 to 20 wt%, and the ratio (wt%) of the second binder polymer in the solid content of the slurry for an upper layer may be 0.5 to 20 wt%, 1 to 15 wt%, 1 to 10 wt%, or 2 to 5 wt%.

In an exemplary embodiment of the present invention, the total ratio (wt%) of the first binder polymer and the second binder polymer in the total solid content of the slurry for a lower layer and the slurry for an upper layer may be 2 to 20 wt%, or 5 to 15 wt%.

In the present specification, the first binder polymer and the second binder polymer only refer to the binder polymer contained in the slurry for a lower layer and the binder polymer contained in the slurry for an upper layer, respectively, and do not mean a specific order.

In an exemplary embodiment of the present invention, the binder polymer is a component that assists in bonding of electrode active material particles and a conductive material and bonding to the electrode current collector, and is added in an amount of, for example, 1 to 50 wt% based on the total weight of the mixture containing the electrode active material. Examples of such a binder polymer includes, but are not limited to, any one binder polymer or mixtures of two or more thereof selected from the group consisting of polyvinylidene fluoride-co-hexafluoropropylene: PVdF), polyvinylidene fluoride-co-trichloroethylene), polymethylmethacrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, and carboxyl methyl cellulose.

In an exemplary embodiment of the present invention, the negative electrode is manufactured by applying and drying negative electrode active material particles on a negative electrode current collector, and if necessary, components such as a conductive material, a binder and a solvent may be further included.

In addition, in an exemplary embodiment of the present invention, the negative electrode active material used for the negative electrode within the range to which the above description is applied can be used without limitation as long as it is an active material known in the art, and the method for manufacturing a negative electrode within the range to which the above description is applied can also be used without limitation as long as it is known in the art.

In an exemplary embodiment of the present invention, the positive electrode may include a positive electrode current collector; and a positive electrode active material layer positioned on at least one surface of the positive electrode current collector and including a positive electrode active material, a binder polymer, and a conductive material.

In an exemplary embodiment of the present invention, the positive electrode current collector has a thickness of 3 to 500 µm, for example. Such a positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. The electrode current collector may have microscopic irregularities formed on a surface to enhance an adhesive force of the positive electrode active material, and may be used in various forms such as a film, a sheet, a foil, a net, a porous body, a foamed body, or a non-woven fabric body.

In an exemplary embodiment of the present invention, the positive electrode active material may include, as a main component, a lithium intercalation material, such as a layered compound such as lithium cobalt oxide (LiCoO₂) and lithium nickel oxide (LiNiO₂), or a compound substituted with one or more transition metals; a lithium manganese oxide such as chemical formula Li₁₊ₓMn₂₋ₓO₄ (where x is 0 to 0.33), LiMnO₃, LiMn₂O₃ and LiMnO₂; a lithium copper oxide (Li₂CuO₂); a vanadium oxide such as LiV₃O₈, LiFe₃O₄, V₂O₅ and Cu₂V₂O₇; a Ni-site type lithiated nickel oxide represented by chemical formula LiNi₁₋ₓMₓO₂ (where M is Co, Mn, Al, Cu, Fe, Mg, B or Ga, and x is 0.01 to 0.3); a lithium manganese composite oxide represented by chemical formula LiMn₂₋ₓMₓO₂ (where M is Co, Ni, Fe, Cr, Zn or Ta, and x is 0.01 to 0.1) or Li₂Mn₃MO₈ (where M is Fe, Co, Ni, Cu or Zn); LiMn₂O₄ in which a part of Li of the chemical formula is substituted with an alkaline earth metal ion; a disulfide compound; Fe₂(MoO₄)₃, or a composite oxide formed by a combination thereof, but is not limited thereto.

In an exemplary embodiment of the present invention, the conductive material is added in an amount of 1 to 50 wt% based on the total weight of the mixture including the positive electrode active material. The conductive material is not particularly limited as long as it has high conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; metal powders such as fluorocarbon, aluminum, and nickel powder; a conductive whisker such as zinc oxide and potassium titanate; a conductive oxide such as titanium oxide; a conductive material such as polyphenylene derivative, and the like may be used.

In an exemplary embodiment of the present invention, the positive electrode is manufactured by applying and drying positive electrode active material particles on a positive electrode current collector, and if necessary, components such as a conductive material, a binder and a solvent may be further included.

Additionally, in the present invention, the positive electrode active material and the like used for manufacture of a positive electrode can be used without limitation as long as it is known in the art, and the method for manufacturing a positive electrode can also be used without limitation as long as it is known in the art.

In an exemplary embodiment of the present invention, non-limiting examples of the solvent used in the manufacture of the negative electrode or positive electrode, that is, the electrode, include acetone, tetrahydrofuran, methylene chloride, chloroform, dimethylformamide, N-methyl-2-pyrrolidone (NMP), cyclohexane, water, or mixtures thereof. These solvents provide the electrode current collector surface with an appropriate level of viscosity such that a slurry coating layer can be formed at a desired level.

In an exemplary embodiment of the present invention, the separator may include a porous polymer substrate and an organic/inorganic composite porous coating layer formed on at least one side of the polymer substrate, and the organic/inorganic composite porous coating layer may include particulate binder resins and inorganic particles.

Materials used in the separator may be common materials used in the relevant field.

In addition, the descriptions of the configurations of the electrode assembly manufacturing apparatus and the manufacturing apparatus according to the present invention can be applied to the manufacturing method according to the present invention and the electrode assembly manufactured by the manufacturing method according to the present invention.

Although the exemplary embodiments of the present invention have been described in detail, it will be obvious to one skilled in the art that the scope of the present invention is not limited thereto and various modifications and variations can be made without departing from the technical scope of the present invention defined in the claims.

## Claims

1. An electrode assembly manufacturing apparatus (100) for manufacturing an electrode assembly (10) in which a first electrode (11) and a second electrode (12) are alternately arranged between folds of a separator (14), the apparatus comprising:
a first electrode supply unit (130) configured to supply the first electrode (11) to a stack table (110);
a second electrode supply unit (140) configured to supply the second electrode (12) to the stack table (110);
a separator supply unit (120) configured to supply the separator (14) to the stack table (110);
the stack table (110) on which the first electrode (11), the separator (14), and the second electrode (12) are stacked in a form of a stack (S) in which the separator (14) last stacked on the stack table (110) has an extended region (A) so as to be wound while being in contact with at least one surface of the stack, and the first electrode (11) and the second electrode (12) are alternately arranged between the folds of the separator (14);
a separator winding unit configured to perform winding such that the extended region (A) for winding of the separator (14) is in contact with at least one surface of the stack (S); and
a brushing unit (190) configured to brush an entire surface of the wound extended region (A) of the stack formed by the separator (14) while heating the same.

2. The electrode assembly manufacturing apparatus (100) of claim 1, wherein the brushing unit (190) comprises a brushing body (190a) in direct contact with the wound stack and a brushing heating unit (190b) configured to heat the wound stack.

3. The electrode assembly manufacturing apparatus (100) of claim 2, wherein the brushing body (190a) is provided in a form of a rotating roller or with a bristle planted on one surface.

4. The electrode assembly manufacturing apparatus (100) of claim 1, wherein the brushing unit (190) is configured to brush an entire surface of the extended region (A) of the separator (14).

5. The electrode assembly manufacturing apparatus (100) of claim 1, further comprising a temperature control unit for enabling brushing the wound stack while heating the same to proceed at a temperature of 100°C to 150°C for 2 to 10 seconds.

6. The electrode assembly manufacturing apparatus (100) of claim 1, further comprising:
a press unit (180) configured to heat and press the brushed stack; and
a gripper (51) configured to grip and move the brushed stack to the press unit (180).

7. The electrode assembly manufacturing apparatus (100) of claim 6, wherein the press unit (180) comprises a pair of pressing blocks each including a heater.

8. The electrode assembly manufacturing apparatus (100) of claim 1, wherein the separator winding unit comprises:
a clamp configured to grip an end of the extended region (A) of the separator;
a clamp moving unit configured to pull the gripped extended region of the separator (14) in a direction opposite to a folded position of the separator (14); and
a rotation unit configured to rotate the stack in which the extended region is pulled in a direction opposite to the folded position of the separator (14) and gripped by the clamp.

9. An electrode assembly manufacturing method for manufacturing an electrode assembly (10) in which a first electrode (11) and a second electrode (12) are alternately arranged between folds of a separator (14), the electrode assembly manufacturing method comprising:
supplying the first electrode (11) to a stack table (110);
supplying the second electrode (12) to the stack table (110);
supplying the separator (14) to the stack table (110);
manufacturing a stack (S) including the first electrode (11), the separator (14), and the second electrode (12) by stacking the first electrode (11), the separator (14), and the second electrode (12) on the stack table (110) such that the separator last stacked on the stack table (110) has an extended region (A) so as to be wound while being in contact with at least one surface of the stack (S), and the first electrode (11) and the second electrode (12) are alternately arranged between the folds of the separator (14);
performing winding such that the extended region (A) for winding of the separator (14) is in contact with at least one surface of the stack (S); and
brushing an entire surface of the wound extended region of the separator while heating the same.

10. The electrode assembly manufacturing method of claim 9, wherein the brushing the wound stack while heating the same proceeds at a temperature of 100°C to 150°C for 2 to 10 seconds.

11. The electrode assembly manufacturing method of claim 9, further comprising heating and pressing the brushed stack.

12. The electrode assembly manufacturing method of claim 11, wherein the heating and pressing the brushed stack comprises:
gripping the brushed stack with a gripper (51) and moving the same to a space between a pair of pressing blocks each comprising a heater;
removing the gripper (51) from the stack (S);
after removing the gripper, moving the pair of pressing blocks in directions approaching each other to surface-press the stack (S); and
heating the stack (S) by the heater.

13. The electrode assembly manufacturing method of claim 9, wherein the brushing the wound stack while heating the same is performed only in a region of the stack where the winding has been done.

14. The electrode assembly manufacturing method of claim 9, wherein the performing the winding such that the extended region (A) for winding of the separator is in contact with at least one surface of the stack comprises:
gripping an end of the extended region of the separator last stacked;
pulling the gripped extended region of the separator (14) in a direction opposite to a folded position of the separator; and
rotating the stack (S) in which the extended region is pulled in the direction opposite to the folded position of the separator and gripped.

## Patentansprüche

1. Vorrichtung zur Herstellung einer Elektrodenanordnung (100) zur Herstellung einer Elektrodenanordnung (10), bei der eine erste Elektrode (11) und eine zweite Elektrode (12) abwechselnd zwischen Falten eines Separators (14) angeordnet sind, wobei die Vorrichtung umfasst:
eine Zuführeinheit für die erste Elektrode (130), die dafür konfiguriert ist, die erste Elektrode (11) einem Stapeltisch (110) zuzuführen;
eine Zuführeinheit für die zweite Elektrode (140), die dafür konfiguriert ist, die zweite Elektrode (12) dem Stapeltisch (110) zuzuführen;
eine Separatorzuführeinheit (120), die dafür konfiguriert ist, den Separator (14) dem Stapeltisch (110) zuzuführen;
den Stapeltisch (110), auf dem die erste Elektrode (11), der Separator (14) und die zweite Elektrode (12) in Form eines Stapels (S) gestapelt werden, bei dem der als letztes auf dem Stapeltisch (110) gestapelte Separator (14) einen erweiterten Bereich (A) aufweist, um gewickelt zu werden, während er in Kontakt mit mindestens einer Oberfläche des Stapels steht, und die erste Elektrode (11) und die zweite Elektrode (12) abwechselnd zwischen den Falten des Separators (14) angeordnet sind;
eine Separatorwickeleinheit, die dafür konfiguriert ist, ein Wickeln derart durchzuführen, dass der erweiterte Bereich (A) zum Wickeln des Separators (14) in Kontakt mit mindestens einer Oberfläche des Stapels (S) steht; und
eine Bürsteinheit (190), die dafür konfiguriert ist, eine gesamte Oberfläche des gewickelten erweiterten Bereichs (A) des durch den Separator (14) gebildeten Stapels zu bürsten, während sie diese erwärmt.

2. Vorrichtung zur Herstellung einer Elektrodenanordnung (100) nach Anspruch 1, wobei die Bürsteinheit (190) einen Bürstenkörper (190a) in direktem Kontakt mit dem gewickelten Stapel und eine Bürstenheizeinheit (190b), die dafür konfiguriert ist, den gewickelten Stapel zu erwärmen, umfasst.

3. Vorrichtung zur Herstellung einer Elektrodenanordnung (100) nach Anspruch 2, wobei der Bürstenkörper (190a) in Form einer rotierenden Rolle oder mit auf einer Oberfläche angebrachten Borsten bereitgestellt ist.

4. Vorrichtung zur Herstellung einer Elektrodenanordnung (100) nach Anspruch 1, wobei die Bürsteinheit (190) dafür konfiguriert ist, eine gesamte Oberfläche des erweiterten Bereichs (A) des Separators (14) zu bürsten.

5. Vorrichtung zur Herstellung einer Elektrodenanordnung (100) nach Anspruch 1, ferner umfassend eine Temperatursteuereinheit zum Ermöglichen des Bürstens des gewickelten Stapels unter dessen Erwärmung bei einer Temperatur von 100 °C bis 150 °C für 2 bis 10 Sekunden.

6. Vorrichtung zur Herstellung einer Elektrodenanordnung (100) nach Anspruch 1, ferner umfassend:
eine Presseinheit (180), die dafür konfiguriert ist, den gebürsteten Stapel zu erwärmen und zu pressen; und
einen Greifer (51), der dafür konfiguriert ist, den gebürsteten Stapel zu greifen und zur Presseinheit (180) zu bewegen.

7. Vorrichtung zur Herstellung einer Elektrodenanordnung (100) nach Anspruch 6, wobei die Presseinheit (180) ein Paar Pressblöcke umfasst, die jeweils eine Heizung enthalten.

8. Vorrichtung zur Herstellung einer Elektrodenanordnung (100) nach Anspruch 1, wobei die Separatorwickeleinheit umfasst:
eine Klemme, die dafür konfiguriert ist, ein Ende des erweiterten Bereichs (A) des Separators zu greifen;
eine Klemmenbewegungeinheit, die dafür konfiguriert ist, den gegriffenen erweiterten Bereich des Separators (14) in eine Richtung entgegen einer gefalteten Position des Separators (14) zu ziehen; und
eine Rotationseinheit, die dafür konfiguriert ist, den Stapel zu drehen, in dem der erweiterte Bereich in eine Richtung entgegen der gefalteten Position des Separators (14) gezogen und von der Klemme gegriffen wird.

9. Verfahren zur Herstellung einer Elektrodenanordnung zur Herstellung einer Elektrodenanordnung (10), bei der eine erste Elektrode (11) und eine zweite Elektrode (12) abwechselnd zwischen Falten eines Separators (14) angeordnet werden, wobei das Verfahren zur Herstellung einer Elektrodenanordnung umfasst:
Zuführen der ersten Elektrode (11) zu einem Stapeltisch (110);
Zuführen der zweiten Elektrode (12) zum Stapeltisch (110);
Zuführen des Separators (14) zum Stapeltisch (110);
Herstellen eines Stapels (S), der die erste Elektrode (11), den Separator (14) und die zweite Elektrode (12) enthält, durch Stapeln der ersten Elektrode (11), des Separators (14) und der zweiten Elektrode (12) auf dem Stapeltisch (110) derart, dass der als letztes auf dem Stapeltisch (110) gestapelte Separator einen erweiterten Bereich (A) aufweist, um gewickelt zu werden, während er in Kontakt mit mindestens einer Oberfläche des Stapels (S) steht, und die erste Elektrode (11) und die zweite Elektrode (12) abwechselnd zwischen den Falten des Separators (14) angeordnet werden;
Durchführen des Wickelns derart, dass der erweiterte Bereich (A) zum Wickeln des Separators (14) in Kontakt mit mindestens einer Oberfläche des Stapels (S) steht; und
Bürsten einer gesamten Oberfläche des gewickelten erweiterten Bereichs des Separators, während dieser erwärmt wird.

10. Verfahren zur Herstellung einer Elektrodenanordnung nach Anspruch 9, wobei das Bürsten des gewickelten Stapels unter dessen Erwärmung bei einer Temperatur von 100 °C bis 150 °C für 2 bis 10 Sekunden erfolgt.

11. Verfahren zur Herstellung einer Elektrodenanordnung nach Anspruch 9, ferner umfassend das Erwärmen und Pressen des gebürsteten Stapels.

12. Verfahren zur Herstellung einer Elektrodenanordnung nach Anspruch 11, wobei das Erwärmen und Pressen des gebürsteten Stapels umfasst:
Greifen des gebürsteten Stapels mit einem Greifer (51) und Bewegen desselben in einen Raum zwischen einem Paar Pressblöcken, die jeweils eine Heizung umfassen;
Entfernen des Greifers (51) vom Stapel (S);
nach dem Entfernen des Greifers, Bewegen des Paars Pressblöcke in aufeinander zu verlaufenden Richtungen, um den Stapel (S) flächig zu pressen; und
Erwärmen des Stapels (S) durch die Heizung.

13. Verfahren zur Herstellung einer Elektrodenanordnung nach Anspruch 9, wobei das Bürsten des gewickelten Stapels unter dessen Erwärmung nur in einem Bereich des Stapels durchgeführt wird, in dem das Wickeln erfolgt ist.

14. Verfahren zur Herstellung einer Elektrodenanordnung nach Anspruch 9, wobei das Durchführen des Wickelns derart, dass der erweiterte Bereich (A) zum Wickeln des Separators in Kontakt mit mindestens einer Oberfläche des Stapels steht, umfasst:
Greifen eines Endes des erweiterten Bereichs des zuletzt gestapelten Separators;
Ziehen des gegriffenen erweiterten Bereichs des Separators (14) in eine Richtung entgegen einer gefalteten Position des Separators; und
Drehen des Stapels (S), in dem der erweiterte Bereich in die Richtung entgegen der gefalteten Position des Separators gezogen und gegriffen wird.

## Revendications

1. Appareil de fabrication d'ensemble d'électrodes (100) pour fabriquer un ensemble d'électrodes (10) dans lequel une première électrode (11) et une deuxième électrode (12) sont disposées en alternance entre des plis d'un séparateur (14), l'appareil comprenant :
une unité de fourniture de première électrode (130) configurée pour fournir la première électrode (11) à une table d'empilement (110) ;
une unité de fourniture de deuxième électrode (140) configurée pour fournir la deuxième électrode (12) à la table d'empilement (110) ;
une unité de fourniture de séparateur (120) configurée pour fournir le séparateur (14) à la table d'empilement (110) ;
la table d'empilement (110) sur laquelle la première électrode (11), le séparateur (14) et la deuxième électrode (12) sont empilés sous la forme d'un empilement (S) dans lequel le séparateur (14) empilé en dernier sur la table d'empilement (110) présente une zone étendue (A) de manière à être enroulé tout en étant en contact avec au moins une surface de l'empilement, et la première électrode (11) et la deuxième électrode (12) sont disposées en alternance entre les plis du séparateur (14) ;
une unité d'enroulement de séparateur configurée pour effectuer un enroulement de telle sorte que la zone étendue (A) pour l'enroulement du séparateur (14) soit en contact avec au moins une surface de l'empilement (S) ; et
une unité de brossage (190) configurée pour brosser une surface entière de la zone étendue (A) enroulée de l'empilement formé par le séparateur (14) tout en chauffant celle-ci.

2. Appareil de fabrication d'ensemble d'électrodes (100) selon la revendication 1, dans lequel l'unité de brossage (190) comprend un corps de brossage (190a) en contact direct avec l'empilement enroulé et une unité de chauffage de brossage (190b) configurée pour chauffer l'empilement enroulé.

3. Appareil de fabrication d'ensemble d'électrodes (100) selon la revendication 2, dans lequel le corps de brossage (190a) est prévu sous la forme d'un rouleau rotatif ou avec des poils implantés sur une surface.

4. Appareil de fabrication d'ensemble d'électrodes (100) selon la revendication 1, dans lequel l'unité de brossage (190) est configurée pour brosser une surface entière de la zone étendue (A) du séparateur (14).

5. Appareil de fabrication d'ensemble d'électrodes (100) selon la revendication 1, comprenant en outre une unité de commande de température pour permettre le brossage de l'empilement enroulé tout en chauffant celui-ci à une température de 100 °C à 150 °C pendant 2 à 10 secondes.

6. Appareil de fabrication d'ensemble d'électrodes (100) selon la revendication 1, comprenant en outre :
une unité de pressage (180) configurée pour chauffer et presser l'empilement brossé ;
et
un organe de préhension (51) configuré pour saisir et déplacer l'empilement brossé vers l'unité de pressage (180).

7. Appareil de fabrication d'ensemble d'électrodes (100) selon la revendication 6, dans lequel l'unité de pressage (180) comprend une paire de blocs de pressage comprenant chacun un élément chauffant.

8. Appareil de fabrication d'ensemble d'électrodes (100) selon la revendication 1, dans lequel l'unité d'enroulement de séparateur comprend :
une pince configurée pour saisir une extrémité de la zone étendue (A) du séparateur ;
une unité de déplacement de pince configurée pour tirer la zone étendue saisie du séparateur (14) dans une direction opposée à une position pliée du séparateur (14) ;
et
une unité de rotation configurée pour faire tourner l'empilement dans lequel la zone étendue est tirée dans une direction opposée à la position pliée du séparateur (14) et saisie par la pince.

9. Procédé de fabrication d'ensemble d'électrodes pour fabriquer un ensemble d'électrodes (10) dans lequel une première électrode (11) et une deuxième électrode (12) sont disposées en alternance entre des plis d'un séparateur (14), le procédé de fabrication d'ensemble d'électrodes comprenant :
fournir la première électrode (11) à une table d'empilement (110) ;
fournir la deuxième électrode (12) à la table d'empilement (110) ;
fournir le séparateur (14) à la table d'empilement (110) ;
fabriquer un empilement (S) comprenant la première électrode (11), le séparateur (14) et la deuxième électrode (12) en empilant la première électrode (11), le séparateur (14) et la deuxième électrode (12) sur la table d'empilement (110) de telle sorte que le séparateur empilé en dernier sur la table d'empilement (110) présente une zone étendue (A) de manière à être enroulé tout en étant en contact avec au moins une surface de l'empilement (S), et que la première électrode (11) et la deuxième électrode (12) soient disposées en alternance entre les plis du séparateur (14) ;
réaliser un enroulement de telle sorte que la zone étendue (A) pour l'enroulement du séparateur (14) soit en contact avec au moins une surface de l'empilement (S) ; et
brosser une surface entière de la zone étendue enroulée du séparateur tout en chauffant celle-ci.

10. Procédé de fabrication d'ensemble d'électrodes selon la revendication 9, dans lequel le brossage de l'empilement enroulé tout en chauffant celui-ci a lieu à une température de 100 °C à 150 °C pendant 2 à 10 secondes.

11. Procédé de fabrication d'ensemble d'électrodes selon la revendication 9, comprenant en outre le chauffage et le pressage de l'empilement brossé.

12. Procédé de fabrication d'ensemble d'électrodes selon la revendication 11, dans lequel le chauffage et le pressage de l'empilement brossé comprennent :
saisir l'empilement brossé avec un organe de préhension (51) et déplacer celui-ci vers un espace entre une paire de blocs de pressage comprenant chacun un élément chauffant ;
retirer l'organe de préhension (51) de l'empilement (S) ;
après le retrait de l'organe de préhension, déplacer la paire de blocs de pressage dans des directions s'approchant l'une de l'autre pour presser en surface l'empilement (S) ;
et
chauffer l'empilement (S) par l'élément chauffant.

13. Procédé de fabrication d'ensemble d'électrodes selon la revendication 9, dans lequel le brossage de l'empilement enroulé tout en chauffant celui-ci est effectué uniquement dans une zone de l'empilement où l'enroulement a été réalisé.

14. Procédé de fabrication d'ensemble d'électrodes selon la revendication 9, dans lequel la réalisation de l'enroulement de telle sorte que la zone étendue (A) pour l'enroulement du séparateur soit en contact avec au moins une surface de l'empilement comprend :
saisir une extrémité de la zone étendue du séparateur empilé en dernier ;
tirer la zone étendue saisie du séparateur (14) dans une direction opposée à une position pliée du séparateur ; et
tourner l'empilement (S) dans lequel la zone étendue est tirée dans la direction opposée à la position pliée du séparateur et saisie.
